(19)

**Europäisches Patentamt**
**European Patent Office**
**Office européen des brevets**

(11) **EP 2 009 370 A1**

(12) **EUROPEAN PATENT APPLICATION**

(43) Date of publication:
**31.12.2008 Bulletin 2009/01**

(51) Int Cl.:
**F25B 30/02** (2006.01)    **F24D 19/10** (2006.01)
**F25B 9/00** (2006.01)    **F25B 49/02** (2006.01)

(21) Application number: **08011610.6**

(22) Date of filing: **26.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.06.2007 JP 2007168858**

(71) Applicant: **Sanden Corporation**
**Isesaki-shi,**
**Gunma 372-8502 (JP)**

(72) Inventors:
• **Kado, Hirotaka**
**Isesaki-shi**
**Gunma 372-8502 (JP)**

• **Kobayashi, Satoshi**
**Isesaki-shi**
**Gunma 372-8502 (JP)**
• **Kato, Isao**
**Isesaki-shi**
**Gunma 372-8502 (JP)**
• **Murakoshi, Yasushi**
**Isesaki-shi**
**Gunma 372-8502 (JP)**

(74) Representative: **Prüfer & Partner GbR**
**European Patent Attorneys**
**Sohnckestraße 12**
**81479 München (DE)**

(54) **Water heater**

(57)    There are provided an atmospheric heat exchanger (10) that exchanges heat between atmospheric air sent by a fan (11) and a refrigerant flowing through a refrigerant circulation path (8) of a heat pump unit (2) to heat the refrigerant; a water heat exchanger (6) that exchanges heat between the refrigerant that has passed through the atmospheric heat exchanger (10) and tank water flowing through a hot-water storage circulation path (16) of a water heating unit (4) to heat the tank water up to given leaving water temperature; entering-water-temperature detecting means (26) that detects entering water temperature of the tank water entering the water heat exchanger (6); and a control unit (30) that drives the fan (11). A control unit (30) changes the rotational frequency of the fan (11) according to the entering water temperature that is detected by the entering-water-temperature detecting means (26).

FIG. 1

## Description

## BACKGROUND OF THE INVENTION

Field of the Invention

The present invention relates to a water heater, and more specifically, to a heat pump water heater that uses a refrigerant consisting of $CO_2$.

Description of the Related Art

Water heaters using heat pumps for energy saving are growing in usage in recent years. A water heater of this type has an atmospheric heat exchanger that exchanges heat between the atmospheric air sent by a fan and a refrigerant flowing through a refrigerant circulation path of a heat pump unit to heat the refrigerant, and a water heat exchanger that exchanges heat between the refrigerant that has passed through the atmospheric heat exchanger and the tank water flowing through a hot-water storage circulation path of a water heating unit to heat the tank water up to given leaving water temperature. The technology of varying the rotational frequency of the fan according to the seasons is publicly known (see Unexamined Japanese Patent Application Publication No. 2003-161545).

The performance of water heaters is evaluated by coefficient of performance (COP). The COP is greatly affected by the heat exchange efficiency of the water heat exchanger. Since the heat exchange between the refrigerant in the heat pump unit and the tank water in the water heating unit is carried out by the water heat exchanger, the water heat exchanger is an important constituent that determines the COP of the water heater.

According to control of the rotational frequency of the fan in conventional art, however, the rotational frequency of the fan is controlled by using only a parameter based upon the seasons, namely an external environment including outside air temperature and the like. The conventional art is not particularly designed to use a parameter that is directly related to the heat exchange of the water heat exchanger. Consequently, an issue about an improvement in COP of water heaters still remains.

## SUMMARY OF THE INVENTION

The present invention has been made in light of the above issue. It is an object of the invention to provide a water heater capable of further improving COP.

In order to accomplish the object, a water heater of the invention has an atmospheric heat exchanger that exchanges heat between atmospheric air sent by a fan and a refrigerant flowing through a refrigerant circulation path of a heat pump unit to heat the refrigerant, a water heat exchanger that exchanges heat between the refrigerant that has passed through the atmospheric heat exchanger and tank water flowing through a hot-water storage circulation path of a water heating unit to heat the tank water up to given leaving water temperature, entering-water-temperature detecting means that detects entering water temperature of the tank water entering the water heat exchanger, and a control unit that drives the fan. The control unit changes a rotational frequency of the fan according to the entering water temperature that is detected by the entering-water-temperature detecting means.

The water heater uses the water heat exchanger to carry out the heat exchange between the refrigerant in the heat pump unit and the tank water in the water heating unit, that is, the heat exchange for heating the tank water entering the water heat exchanger from the entering-water temperature up to the given leaving water temperature. Therefore, the water heat exchanger is an important constituent when determining the COP of the water heater. In this view, the COP of the water heater can be vastly improved by using the entering water temperature that is a parameter directly related to the heat exchange in the water heat exchanger as an element that determines the rotational frequency of the fan.

In a preferable aspect of the water heater, the control unit reduces the rotational frequency of the fan in stages along with increase of the entering water temperature.

With this structure, the rotational frequency of the fan can be kept low when atmospheric heat is not required. This suppresses the power consumption and noise of the fan and also improves the COP of the water heater.

In a preferable aspect, the water heater further includes outside-air-temperature detecting means that detects outside air temperature, and the control unit increases the rotational frequency of the fan in stages along with decrease of the outside air temperature that is detected by the outside-air-temperature detecting means.

With this structure, if the outside air temperature is changed, the atmospheric heat can be stably introduced into the refrigerant and thus the tank water in stages. Consequently, the COP of the water heater is reliably improved.

In a preferable aspect, the water heater further includes leaving-water-temperature setting means that sets preset leaving water temperature to heat the tank water up to the given leaving water temperature in the water heat exchanger. Furthermore, the control unit increases the rotational frequency of the fan in stages along with increase of the preset leaving water temperature.

With this structure, if the preset leaving water temperature is changed, the atmospheric heat can be smoothly introduced into the refrigerant and thus the tank water in stages according to an operation condition of the water heater. Consequently, the COP of the water heater can be more reliably improved.

In a preferable aspect of the water heater, the control unit calculates an environmental load to which the heat pump unit is exposed, on the basis of the entering water temperature, the outside air temperature, and the preset leaving water temperature. The control unit then increases the rotational frequency of the fan in stages along with decrease of the environmental load.

With this structure, if environmental elements including the interior, exterior and operation of the heat pump unit are varied or changed all at once, the atmospheric heat can be smoothly and stably introduced into the refrigerant and thus the tank water in stages according to the operation condition of the water heater. Consequently, the COP of the water heater can be more reliably improved.

In a preferable aspect of the water heater, the refrigerant is $CO_2$ gas.

With this structure, it is possible to further reduce the load on the global environment and improve the COP of the water heater at the same time.

## BRIEF DESCRIPTION OF THE DRAWINGS

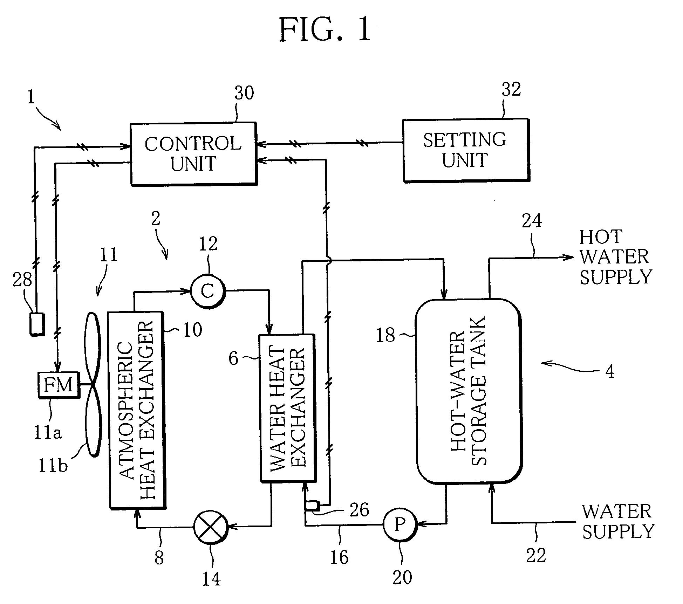

FIG. 1 is a schematic configuration view of a water heater;

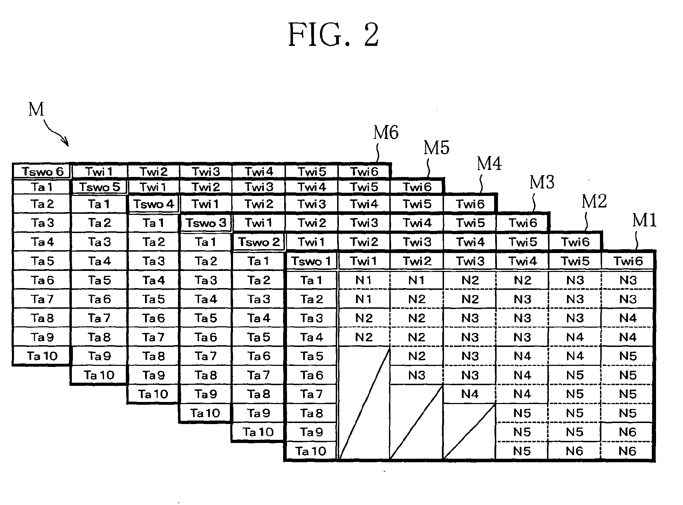

FIG. 2 is a schematic view of a map that is defined by a control unit shown in FIG. 1;

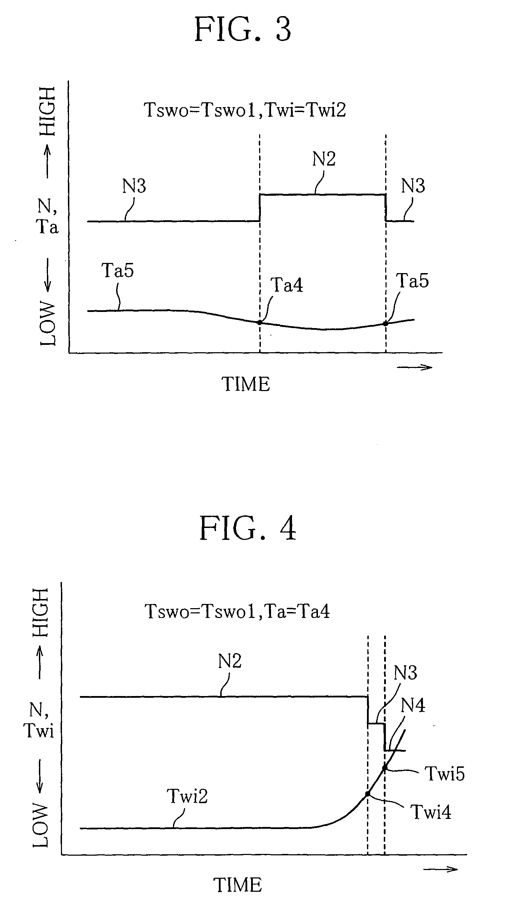

FIG. 3 is a graph chronologically showing changes of a rotational frequency of a fan motor, which are caused by control of the rotational frequency of the fan motor when outside air temperature is varied under the condition where preset leaving water temperature of tank water that is supplied from a water heating path and entering water temperature of the tank water entering a water heat exchanger are fixed;

FIG. 4 is a graph chronologically showing changes of the rotational frequency of the fan motor, which are caused by control of the rotational frequency of the fan motor when the entering water temperature of the tank water entering the water heat exchanger is varied under the condition where the preset leaving water temperature of the tank water that is supplied from the water heating path and the outside air temperature are fixed; and

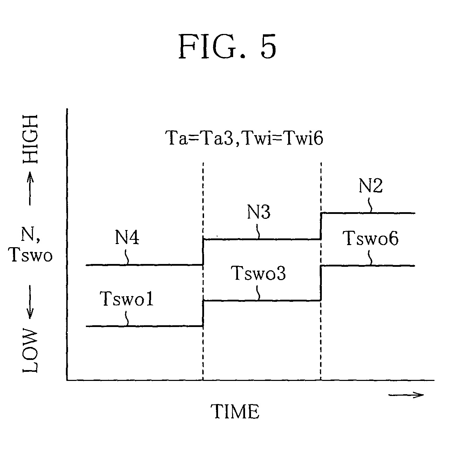

FIG. 5 is a graph chronologically showing changes of the rotational frequency of the fan motor, which are caused by control of the rotational frequency of the fan motor when the preset leaving water temperature of the tank water supplied from the water heating path is varied under the condition where the outside air temperature and the entering water temperature of the tank water entering the water heat exchanger are fixed.

## DETAILED DESCRIPTION OF THE PREFERRED EMBODIMENTS

One embodiment of the invention will be described below with reference to the attached drawings.

FIG. 1 schematically shows a water heater 1. The water heater 1 is formed largely of a heat pump unit 2 and a water heating unit 4. The units 2 and 4 are thermally connected to each other through a water heat exchanger 6.

The heat pump unit 2 has a refrigerant circulation path 8 through which a refrigerant consisting, for example, of $CO_2$ flows. Interposed in the refrigerant circulation path 8 are an atmospheric heat exchanger 10 that exchanges heat between atmospheric air and the refrigerant, a compressor 12, a water heat exchanger 6, an expansion valve 14, and the like, in the order named. The atmospheric heat exchanger 10 has a fan 11 formed of a fan motor (hereinafter, referred to as FM) 11a and vanes 11b.

The water heating unit 4 includes a hot-water storage circulation path 16 through which the tank water flows. Interposed in the hot-water storage circulation path 16 are the water heat exchanger 6, a hot-water storage tank 18, a circulation pump 20 and the like, in the order named. The water heating unit 4 includes a water supply path 22 that supplies water to the hot-water storage tank 18 and a water heating path 24 that supplies hot water from the hot-water storage tank 18.

In the heat pump unit 2, the atmospheric heat exchanger 10 exchanges heat between the atmospheric air sent by the fan 11 and the refrigerant flowing through the refrigerant circulation path 8 of the heat pump unit 2. In this manner, atmospheric heat is introduced into the refrigerant, and the refrigerant is thus heated. The water heat exchanger 6 subsequently exchanges heat between the heated refrigerant and the tank water flowing through the hot-water storage circulation path 16 of the water heating unit 4. The heat of the refrigerant is introduced into the tank water so that the tank water is heated up to given leaving water temperature.

In the water heating unit 4, when the circulation pump 20 is driven, city water that is supplied from the water supply path 22 is circulated through the hot-water storage circulation path 16 as tank water. The tank water heated up to the given leaving water temperature in the water heat exchanger 6 as described above is discharged from the water heating path 24, and is used for various purposes.

The hot-water storage circulation path 16 is provided with an entering water temperature sensor (entering-water-temperature detecting means) 26 that detects entering water temperature Twi of the tank water entering the water heat exchanger 6. The water heater 1 is provided with an outside air temperature sensor (outside-air-temperature detecting means) 28 that detects the temperature of the atmospheric air sent by the fan 11, that is, outside air temperature Ta.

Not only the temperature sensors 26 and 28 and the FM 11a but also a drive member of the compressor 12 and that of the expansion valve 14 are electrically connected to a control unit 30 that controls the water heater 1 (electrical connections other than those of the control unit 30 to the temperature sensors 26 and 28 and the FM 11a are not shown).

The control unit 30 is electrically connected with a setting unit (leaving-water-temperature setting means) 32 that carries out various setting of the water heater 1. According to the setting unit 32, for example, if the user of the water heater 1 sets preset leaving water temperature Tswo of the tank water, the control unit 30 drives the compressor 12, changes the rotational frequency of the compressor 12, and also changes an opening angle of the expansion valve 14 according to the entering water temperature Twi and the outside air temperature Ta that are detected by the temperature sensors 26 and 28, respectively. The control unit 30 furthermore drives the FM 11a and changes a rotational frequency N of the FM 11a, to thereby discharge the tank water heated up to desired leaving water temperature Two from the water heating path 24.

To be concrete, as shown in FIG. 2, the FM rotational frequency N is determined by map M defined by the control unit 30.

The map M is formed, for example, of maps M1 to M6 corresponding to preset leaving water temperatures Tswo1 to Tswo6 (Tswo1<Tswo2<Tswo3<Tswo4<Tswo5<Tswo6). Based upon the maps M1 to M6, the FM rotational frequency N is determined according to the detected entering water temperature Twi and the detected outside air temperature Ta.

For instance, the FM rotational frequency N is divided into steps, namely N1 to N6 (N1>N2>N3>N4>N5>N6). The entering water temperature Twi is divided into temperature ranges Twi1 to Twi6 (Twi1<Twi2<Twi3<Twi4<Twi5<Twi6). The outside air temperature Ta is divided into temperature ranges Ta1 to Ta10 (Ta1<Ta2<Ta3<Ta4<Ta5<Ta6<Ta7<Ta8<Ta9<Ta10). When the setting unit 32 selects one of the preset leaving water temperatures Tswo1 to Tswo6, within the corresponding one of the maps M1 to M6, it is determined which one of the temperature ranges Twi1 to Twi6 the detected entering water temperature Twi falls in and which one of the temperature ranges Ta1 to Ta6 the detected outside air temperature Ta falls in. The FM 11a is driven at one of the FM rotational frequencies N1 to N6 which are determined according to the map M.

At the stage of preparing the maps M1 to M6, environmental load Qf to which the heat pump unit 2 is exposed is calculated into Qf1 to Qf6 correspondingly to the preset leaving water temperatures Tswo1 to Tswo6 according to the following skeleton formulae on the basis of the detected entering water temperature Twi and the detected outside air temperature Ta.

$$\text{Tswo1: } Qf1 = A \times Ta + B1 \times Twi$$

$$\text{Tswo2: } Qf2 = A \times Ta + B2 \times Twi$$

$$\text{Tswo3: } Qf3 = A \times Ta + B3 \times Twi$$

$$\text{Tswo4: } Qf4 = A \times Ta + B4 \times Twi$$

$$\text{Tswo5: } Qf5 = A \times Ta + B5 \times Twi$$

$$\text{Tswo6: } Qf6 = A \times Ta + B6 \times Twi$$

The environmental load Qf is calculated on the basis of the entering water temperature Twi, the outside air temperature Ta, and the preset leaving water temperature Tswo. The environmental load Qf is increased along with increase of the entering water temperature Twi or the outside air temperature Ta.

Coefficient A and coefficients B1 to B6 in the skeleton formulae are properly determined according to specifications of the water heater 1. The coefficients B1 to B6 satisfy a relational expression B1>B2>B3>B4>B5>B6. Therefore, under the condition where the entering water temperature Twi and the outside air temperature Ta are fixed, a relational expression Qf1>Qf2>Qf3>Qf4>Qf5>Qf6 is satisfied, and the environmental load Qf is reduced as the preset leaving water temperature Tswo is increased.

According to which environmental load Qf (Qf1 to Qf6) corresponds to which relational expression below, the FM rotational frequencies N1 to N6 are allocated so that the COP of the water heater 1 is most suitable.

$$\text{N1: } Qf < X$$

$$\text{N2: } X \leq Qf < X1$$

$$\text{N3: } X1 \leq Qf < X2$$

$$\text{N4: } X2 \leq Qf < X3$$

$$\text{N5: } X3 \leq Qf < X4$$

$$N6: \quad X4 \leq Qf$$

Values X1 to X4 used in the above relational expressions are properly determined according to the specifications of the water heater 1. A relational expression X1<X2<X3<X4 is satisfied. Therefore, the FM rotational frequency N is increased as the environmental load Qf is reduced. In other words, the map M is prepared to increase the FM rotational frequency N along with the decrease of the entering water temperature Twi or the outside air temperature Ta, or along with the increase of the preset leaving water temperature Tswo.

The FM rotational frequency control that is implemented by the control unit 30 using the map M will be described in details with reference to FIGS. 3 to 5.

FIG. 3 is a graph chronologically showing changes of the FM rotational frequency N, which are caused by the FM rotational frequency control when the outside air temperature Ta is varied under the condition where the preset leaving water temperature Tswo and the entering water temperature Twi are fixed to Tswo1 and Twi2, respectively.

When the outside air temperature Ta drops from Ta6 to Ta5 and then rises to Ta6 again, the FM rotational frequency control increases the FM rotational frequency N from N3 to N2 in stages, and reduces the FM rotational frequency N to N3 again in response to the changes of the outside air temperature Ta on the basis of the map M.

FIG. 4 is a graph chronologically showing changes of the FM rotational frequency N, which are caused by the FM rotational frequency control when the entering water temperature Twi is varied under the condition where the preset leaving water temperature Tswo and the outside air temperature Ta are fixed to Tswo1 and Ta4, respectively.

When the entering water temperature Twi rises from Twi2 to Twi4 then to Twi5, the FM rotational frequency control decreases the FM rotational frequency N from N2 to N3 and then to N4 in stages on the basis of the map M in response to the changes of the entering water temperature Twi.

FIG. 5 is a graph chronologically showing changes of the FM rotational frequency N, which are caused by the FM rotational frequency control when the preset leaving water temperature Tswo is varied under the condition where the outside air temperature Ta and the entering water temperature Twi are fixed to Ta3 and Twi6, respectively.

The FM rotational frequency control increases the FM rotational frequency N from N4 to N3 and then to N2 in stages when the user operates the setting unit 32 to increase the preset leaving water temperature Tswo from Tswo1 to Tswo3 and then to Tswo6.

The above-described FM rotational frequency control is started with the FM rotational frequency N determined by the entering water temperature Twi and the outside air temperature Ta, which are detected at the start of the operation of the water heater 1, and the preset leaving water temperature Tswo. After that, the FM rotational frequency control is continuously carried out by updating the FM rotational frequency N with a given control period and on given conditions.

When the environmental load Qf is reduced in response to the decrease of the entering water temperature Twi or the outside air temperature Ta, or in response to the increase of the preset leaving water temperature Tswo, the present embodiment gradually increases FM 11a up to the FM rotational frequency N that offers the optimum COP of the water heater 1 as described above. That is to say, the environmental load Qf, which is calculated on the basis of all parameters related to the interior, exterior and operation of the heat pump unit 2, is used as a parameter that determines the FM rotational frequency N of the FM rotational frequency control.

The COP of the water heater 1 can be remarkably improved by carrying out the heat exchange between the refrigerant in the heat pump unit 2 and the tank water in the water heating unit 4, and by using, as a determining factor of the FM rotational frequency N, the entering water temperature Twi serving as the parameter related directly to the heat exchange of the water heat exchanger 6 that is an important constituent when determining the COP of the water heater 1.

If the temperature of the tank water supplied to the water heating unit 4, the entering water temperature Twi or the outside air temperature Ta is varied, or if the preset leaving water temperature Tswo is changed by the user, the gradual control of FM rotational frequency N makes it possible to smoothly and stably introduce the atmospheric heat into the refrigerant and thus the tank water in stages according to the operation condition of the water heater 1. Consequently, the COP of the water heater 1 can be reliably improved.

When the atmospheric heat is not necessary in summer where the outside air temperature Ta is high, the FM rotational frequency N can be kept low by gradually reducing the FM rotational frequency N along with the increase of the entering water temperature Twi. It is then possible to suppress the power consumption and noise of the fan 11 and reduce the load applied to the compressor 12. At the same time, it is also possible to provide the desired leaving water temperature Two, namely an endothermic amount that is required in the atmospheric heat exchanger 10 and thus the water heat exchanger 6, while driving the FM 11a with the optimum FM rotational frequency N.

In winter where the outside air temperature Ta is low, the FM 11a can be driven by the optimum FM rotational frequency N. The atmospheric heat exchanger 10 therefore properly operates and may be retarded in defrost timing.

This is the end of the descriptions about the one embodiment of the invention. However, the invention is not limited to this embodiment, and may be modified in various ways without deviating from the gist of the invention.

For example, the embodiment uses the map to determine the FM rotational frequency N, but the map does not necessarily have to be used. On the contrary, the FM rotational frequency N may be determined by using an arithmetic expression.

In addition, the refrigerant does not necessarily have to be $CO_2$ gas as in the embodiment. Nevertheless, to use $CO_2$ gas as refrigerant can both reduce the load applied to the global environment and achieve the above-mentioned operation and advantages.

**Claims**

1.  A water heater (1) comprising:

    an atmospheric heat exchanger (10) that exchanges heat between atmospheric air sent by a fan (11) and a refrigerant flowing through a refrigerant circulation path (8) of a heat pump unit (2) to heat the refrigerant;
    a water heat exchanger (6) that exchanges heat between the refrigerant that has passed through the atmospheric heat exchanger (10) and tank water flowing through a hot-water storage circulation path (16) of a water heating unit (4) to heat the tank water up to given leaving water temperature;
    entering-water-temperature detecting means (26) that detects entering water temperature of the tank water entering the water heat exchanger (6); and
    a control unit (30) that drives the fan (11),

    **characterized in that**:

    the control unit (30) changes a rotational frequency of the fan (11) according to the entering water temperature that is detected by the entering-water-temperature detecting means (26).

2.  The water heater (1) according to claim 1, **characterized in that**:

    the control unit (30) reduces the rotational frequency of the fan (11) in stages along with increase of the entering water temperature.

3.  The water heater (1) according to either one of claims 1 and 2, further including:

    outside-air-temperature detecting means (28) that detects outside air temperature, **characterized in that**:

    the control unit (30) increases the rotational frequency of the fan (11) in stages along with decrease of the outside air temperature that is detected by the outside-air-temperature detecting means (28).

4.  The water heater (1) according to any one of claims 1 to 3, further including:

    leaving-water-temperature setting means (32) that sets preset leaving water temperature to heat the tank water up to the given leaving water temperature with the water heat exchanger (6), **characterized in that**:

    the control unit (30) increases the rotational frequency of the fan (11) in stages along with the increase of the preset leaving water temperature.

5.  The water heater (1) according to claim 4, **characterized in that**:

    the control unit (30) calculates an environmental load to which the heat pump unit (2) is exposed, on the basis of the entering water temperature, the outside air temperature, and the preset leaving water temperature, and increases the rotational frequency of the fan (11) in stages along with decrease of the environmental load.

6.  The water heater (1) according to any one of claims 1 to 5, **characterized in that**:

    the refrigerant is $CO_2$ gas.

# FIG. 1

# FIG. 2

M →  M6  M5  M4  M3  M2  M1

| Tswo6 | Twi1 | Twi2 | Twi3 | Twi4 | Twi5 | Twi6 | | | | | |
|---|---|---|---|---|---|---|---|---|---|---|---|
| Ta1 | Tswo5 | Twi1 | Twi2 | Twi3 | Twi4 | Twi5 | Twi6 | | | | |
| Ta2 | Ta1 | Tswo4 | Twi1 | Twi2 | Twi3 | Twi4 | Twi5 | Twi6 | | | |
| Ta3 | Ta2 | Ta1 | Tswo3 | Twi1 | Twi2 | Twi3 | Twi4 | Twi5 | Twi6 | | |
| Ta4 | Ta3 | Ta2 | Ta1 | Tswo2 | Twi1 | Twi2 | Twi3 | Twi4 | Twi5 | Twi6 | |
| Ta5 | Ta4 | Ta3 | Ta2 | Ta1 | Tswo1 | Twi1 | Twi2 | Twi3 | Twi4 | Twi5 | Twi6 |
| Ta6 | Ta5 | Ta4 | Ta3 | Ta2 | Ta1 | N1 | N1 | N2 | N2 | N3 | N3 |
| Ta7 | Ta6 | Ta5 | Ta4 | Ta3 | Ta2 | N1 | N2 | N2 | N3 | N3 | N3 |
| Ta8 | Ta7 | Ta6 | Ta5 | Ta4 | Ta3 | N2 | N2 | N3 | N3 | N3 | N4 |
| Ta9 | Ta8 | Ta7 | Ta6 | Ta5 | Ta4 | N2 | N2 | N3 | N3 | N4 | N4 |
| Ta10 | Ta9 | Ta8 | Ta7 | Ta6 | Ta5 | / | N2 | N3 | N4 | N4 | N5 |
| | Ta10 | Ta9 | Ta8 | Ta7 | Ta6 | / | N3 | N3 | N4 | N5 | N5 |
| | | Ta10 | Ta9 | Ta8 | Ta7 | / | / | N4 | N4 | N5 | N5 |
| | | | Ta10 | Ta9 | Ta8 | / | / | / | N5 | N5 | N5 |
| | | | | Ta10 | Ta9 | / | / | / | N5 | N5 | N6 |
| | | | | | Ta10 | / | / | / | N5 | N6 | N6 |

# FIG. 3

Tswo=Tswo1,Twi=Twi2

N3    N2    N3

N, Ta    HIGH ↑    LOW ↓

Ta5    Ta4    Ta5

TIME →

# FIG. 4

Tswo=Tswo1,Ta=Ta4

N2    N3    N4

N, Twi    HIGH ↑    LOW ↓

Twi2    Twi5    Twi4

TIME →

# FIG. 5

Europäisches
Patentamt

European
Patent Office

Office européen
des brevets

**EUROPEAN SEARCH REPORT**

Application Number

EP 08 01 1610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2005 156030 A (HITACHI HOME & LIFE SOLUTIONS) 16 June 2005 (2005-06-16) * paragraph [0014] - paragraph [0027]; figures 1-5 * | 1-6 | INV. F25B30/02 F24D19/10 |
| X | EP 1 655 558 A (MATSUSHITA ELECTRIC IND CO LTD [JP]) 10 May 2006 (2006-05-10) * paragraph [0022] - paragraph [0077]; figures 1-10 * * paragraph [0034]; figure 1 * | 1,2,4-6 | ADD. F25B9/00 F25B49/02 |
| X | JP 2003 161545 A (DAIKIN IND LTD) 6 June 2003 (2003-06-06) * paragraph [0019] - paragraph [0038]; figures 1-7 * | 1-5 | |
| X | JP 2003 222396 A (DAIKIN IND LTD) 8 August 2003 (2003-08-08) * paragraph [0019] - paragraph [0042]; figures 1-5 * | 1-6 | |
| X | JP 2005 121284 A (MATSUSHITA ELECTRIC IND CO LTD) 12 May 2005 (2005-05-12) * paragraph [0031]; figures 1,2 * | 1-5 | TECHNICAL FIELDS SEARCHED (IPC) F25B F24D F24H |

The present search report has been drawn up for all claims

| Place of search | Date of completion of the search | Examiner |
|---|---|---|
| Munich | 7 November 2008 | Szilagyi, Barnabas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 2 009 370 A1**

## ANNEX TO THE EUROPEAN SEARCH REPORT
## ON EUROPEAN PATENT APPLICATION NO.

EP 08 01 1610

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2008

| Patent document cited in search report | | Publication date | Patent family member(s) | | Publication date |
|---|---|---|---|---|---|
| JP 2005156030 | A | 16-06-2005 | NONE | | |
| EP 1655558 | A | 10-05-2006 | CN | 1769815 A | 10-05-2006 |
| | | | CN | 101033895 A | 12-09-2007 |
| | | | DE | 602005001830 T2 | 17-04-2008 |
| | | | JP | 2006132818 A | 25-05-2006 |
| | | | US | 2006096306 A1 | 11-05-2006 |
| JP 2003161545 | A | 06-06-2003 | JP | 3864768 B2 | 10-01-2007 |
| JP 2003222396 | A | 08-08-2003 | NONE | | |
| JP 2005121284 | A | 12-05-2005 | JP | 3915767 B2 | 16-05-2007 |

**EP 2 009 370 A1**

**REFERENCES CITED IN THE DESCRIPTION**

**Patent documents cited in the description**

- JP 2003161545 A